# EUROPÄISCHE PATENTSCHRIFT

(11) **EP 2 389 524 B1**
(45) Veröffentlichungstag und Bekanntmachung des Hinweises auf die Patenterteilung: **02.05.2012**
(21) Anmeldenummer: 10718974.8
(22) Anmeldetag: 07.05.2010
(51) Int. Cl.: F16D 69/04, F16D 65/092

(54) **SCHEIBENBREMSBELAGTRÄGERPLATTE**
DISK BRAKE LINING CARRIER PLATE
PLATEAU DE GARNITURE DE FREIN À DISQUE

(30) Priorität: 08.05.2009 DE 102009020521
(43) Veröffentlichungstag der Anmeldung: 30.11.2011
(73) Patentinhaber: Dömer GmbH & Co. KG, 57368 Lennestadt (DE)
(72) Erfinder: ASBECK, Jochen, 57439 Attendorn (DE)
(74) Vertreter: Oberwalleney, Stephan
(86) Internationale Anmeldenummer: PCT/EP2010/056247
(87) Internationale Veröffentlichungsnummer: WO 2010/128133

(56) Entgegenhaltungen:
- DE-A1-102005 028 796
- JP-A- 60 023 644
- US-A1- 2002 125 081
- US-A1- 2007 170 023

## Beschreibung

Die Erfindung betrifft eine Bremsbelagträgerplatte für eine Scheibenbremse, die aus umgeformtem Stahlblech von gleichmäßiger Dicke besteht und erhabene Stegbereiche und demgegenüber zurückversetzte Durchstellungsbereiche umfaßt, die im wesentlichen die Auflagefläche für einen Bremsbelag bilden, sowie ein Verfahren zur Herstellung einer derartigen Bremsbelagträgerplatte.

Eine Bremsbelagträgerplatte, die aus Gußwerkstoff besteht, ist aus der DE 10 2004 051 046 A1 bekannt. Hierbei ist ein umlaufender Randsteg vorgesehen, der der Stabilität der Trägerplatte und als Aufsetzfläche für eine Abdichtvorrichtung beim Aufbringen eines Brems- oder Reibbelages auf die Trägerplatte dient. Hierbei wird das Material des Bremsbelages in plastischem Zustand als Maische auf die Trägerplatte aufgetragen und anschließend verfestigt. Die Trägerplatte hat auf der Rückseite eine im wesentlichen ebene Oberfläche, so daß sie im Bereich des Randsteges die Platte ihre maximale Dicke aufweist, die größer ist als die Dicke im Bereich der Auflagefläche für den Bremsbelag. Im Bereich der Auflagefläche für den Bremsbelag sind Rippen ausgebildet, deren Kopffläche die Oberfläche des Randsteges in der Höhe noch überragt. Die gerade verlaufenden Rippen sollen nach einer umformenden Nachbearbeitung Hinterschneidungen bilden, durch die der Bremsbelag fest auf der Trägerplatte verankert wird.

Aus der US-A-2002/0125081 ist eine Bremsbelagträgerplatte für eine Scheibenbremse beschrieben, die aus umgeformten Stahlblech von gleichmäßiger Dicke besteht und erhabene Stegbereiche und dem gegenüber zurückversetze Durchstellungsbereiche umfaßt, die im wesentlichen die Auflagefläche für einen Bremsbelag bilden. Die Stegbereiche sind hierbei als einzelner umlaufender Steg ausgebildet, der den Rand der Trägerplatte bildet und den Durchstellungsbereich umlaufend begrenzt. Da der Randbereich Halte- und Führungsaufgaben erfüllen muß, ist es notwendig, auf der Plattenrückseite Anlageelemente aufzuschweißen, um die Platte auf eine Dicke zu bringen, die derjenigen bekannter Bremsbelagträgerplatten entspricht. Nur auf diese Weise ist die Trägerplatte als Austauschelement für bekannte Trägerplatten in vorgegebenen Scheibenbremsstrukturen einsetzbar.

Aus der DE 103 30 635 A1 ist ein Bremsbelag für eine Scheibenbremse für ein Fahrzeug bekannt. Der Bremsbelag umfaßt eine Belagträgerplatte und einen darauf befestigten Reibbelag. Die Belagträgerplatte ist mit einer oder mehreren Sicken versehen. Hierdurch soll die Dicke und das Volumen des Reibbelags vergrößert werden. Die Sicken können durch Umformen in die Belagträgerplatte eingebracht oder durch Aufschweißen von Gurten auf die Belagträgerplatte gebildet werden.

Aus der DE 197 06 123 A1 ist eine Bremsbacke für eine Scheibenbremse und ein Verfahren zu seiner Herstellung bekannt. Die Bremsbacke weist eine metallische Rückenplatte mit unterschiedlicher Rückenplattendicke auf. Die Rückenplatte hat einen schlanken Abschnitt im Bereich des Reibbelags und einen verdickten angrenzenden Bereich. Der schlanke Bereich wird durch Sicken versteift, die in verschiedenen Konfigurationen ausgebildet werden können.

Aus der WO 97/05400 A1 ist ein Bremsbelagträger, insbesondere für Nutzfahrzeug-Scheibenbremsen bekannt. Der Bremsbelagträger wird aus zwei Einzelblechen zusammengefügt. Hierfür wird eines der Einzelbleche mit Ausprägungen und das andere Einzelblech mit entsprechenden Vertiefungen zur Aufnahme der Vorsprünge versehen. Die Einzelbleche lassen sich durch einen Preßvorgang fest zusammenfügen, insbesondere derart, daß die Vorsprünge mit Nietwirkung in die entsprechenden Vertiefungen des anderen Einzelblechs eingreifen. Auf diese Weise soll eine verschiebesichere Verbindung der beiden Einzelbleche erreicht werden, ohne daß komplizierte und teure Klebe- oder Schweißvorgänge notwendig sind.

Ausgehend von dem vorbekannten Stand der Technik liegt der Erfindung die Aufgabe zugrunde, eine Bremsbelagträgerplatte bereitzustellen, die eine hohe Festigkeit bei geringem Gewicht aufweist und kostengünstig herzustellen ist. Die Aufgabe besteht ferner darin, ein geeignetes Verfahren vorzuschlagen, daß die Herstellung einer solchen Bremsbelagträgerplatte mit hoher Festigkeit bei geringem Gewicht ermöglicht.

Die Lösung hierfür besteht in einer Bremsbelagträgerplatte, die aus umgeformten Stahlblech von gleichmäßiger Dicke besteht und erhabene Stegbereiche und demgegenüber zurückversetzte Durchstellungsbereiche umfaßt, die im wesentlichen die Auflagefläche für einen Bremsbelag bilden, wobei eine Mehrzahl von Stegbereichen vorgesehen ist.

Soweit hier die Begriffe "erhabene Stegbereiche" und "zurückversetzte Durchstellungsbereiche" verwendet werden, bezieht sich dies auf die Betrachtung von der Vorderseite bzw. Bremsbelagseite. In der Betrachtung von der Rückseite bzw. Bremskolbenseite sind diese Stegbereiche aufgrund der gleichmäßigen Materialdicke dann als Nuten oder Vertiefungen in einer und/oder am Rande einer insgesamt höherliegenden Durchstellungsfläche zu erkennen. Mit dem Begriff "Durchstellung" ist im Sinne der Erfindung insbesondere eine im Wege eines Umformvorgangs hergestellte Einprägung auf der Vorderseite der Belagträgerplatte gemeint, die auf der Rückseite der Belagträgerplatte eine entsprechende Ausprägung bildet. Insofern kann anstelle des Begriffs Durchstellung auch der Begriff Durchsetzung gleichbedeutend verwendet werden.

Die Materialdicke bleibt auch nach der Umformung im wesentlichen gleichmäßig, wobei Dickenabweichungen in geringstem Umfang nur auf die Umformung des ursprünglich gleichmäßig dicken Stahlbleches zurückzuführen sind. Nach einer bevorzugten Ausgestaltung ist vorgesehen, daß auf der Plattenrückseite in zumindest eine der Vertiefungen ein Anlageelement eingelegt und stoffschlüssig befestigt ist. Zur stoffschlüssigen Verbindung des bzw. der Anlageelemente mit der Grundplatte wird vorzugsweise Schweißen verwendet.

Durch die Darstellung einer Mehrzahl von Stegbereichen kann zum einen die Festigkeit, insbesondere die Biegesteifigkeit der Trägerplatte weiter erhöht werden, zum anderen kann die erforderliche Aufdickung der Trägerplatte bei geeigneter Ausgestaltung der Mehrzahl von Stegbereichen erfolgen, ohne daß aufgeschweißte Anlageelemente erforderlich werden. Die Mehrzahl von Stegbereichen bezieht sich sowohl auf den Rand der Belagträgerplatte als auch auf einen zentralen Bereich der Belagträgerplatte, der zum Rand beabstandet ist. Das heißt, die beanspruchten Stegbereiche können einen umlaufenden oder mehrere abschnittsweise Randbereiche der Belagträgerplatte bilden, die von der Vorderseite betrachtet gegenüber den Durchstellungsbereichen vorstehen. Alternativ oder in Ergänzung können die beanspruchten Stegbereiche auch einen oder mehrere zentrale Stegbereiche bilden, die jeweils innerhalb der zurückversetzten Durchstellungsbereiche, insbesondere mit Abstand zum Randbereich, angeordnet sind.

Die Stegbereiche können gerade und/oder gebogen ausgeführt sein. Weiterhin ist zu betonen, daß mit dem Begriff "Stegbereiche" nicht nur eine längliche Form gemeint ist, sondern auch verkürzte Formen bis hin zum Quadrat, Dreieck oder Polygon, und abgerundete Formen bis hin zum Kreis eingeschlossen sein sollen. Es ist vorgesehen, daß innerhalb der zurückversetzten Durchstellungsbereiche zumindest ein zentraler Stegbereich vorgesehen ist, der zum Rand der Belagträgerplatte beabstandet ist. Durch das Einbringen mehrerer Stegbereiche wird eine höhere Steifigkeit der Belagträgerplatte erreicht.

Mit den genannten Mitteln wird eine Trägerplatte bereitgestellt, die jeder Trägerplatte der vorbekannten Art in den Konturen formgleich nachgebildet werden kann und als Austauschprodukt ersetzen kann, wobei durch die Verwendung von Stahlblech anstelle von Gußwerkstoff höhere Festigkeitswerte zu erzielen sind. Mit dem Begriff "Austauschprodukt" ist sowohl die weitere Verarbeitung bis zur fertigen Bremsbelagplatte als auch deren Einbau und Funktion in einer Scheibenbremse eingeschlossen. Durch das grundsätzlich gegenüber bekannten ebenen Trägerplatten aus Stahl dünnere Material ist ein verringerter Materialeinsatz möglich.

In einer ersten Ausgestaltungsform ist vorgesehen, daß die erhabenen Stegbereiche von begrenzter Länge innerhalb der zurückversetzten Durchstellungsbereiche ausgebildet sind. Hiermit entsteht zugleich auf der Auflagefläche für den Bremsbelag eine Mehrzahl von Rippen, die die Formsteifigkeit der Trägerplatte insgesamt erhöhen und einen Formschluß gegenüber dem Bremsbelag bilden können. Bei geeigneter Wahl der Höhe der Stegbereiche sind diese zugleich geeignet, die Grenze des zulässigen Bremsbelagverschleißes anzuzeigen, sobald sie in diesem hervortreten.

In bevorzugter Ausgestaltung ist vorgesehen, daß die Stegbereiche dieser Art etwa gleichmäßig über die Trägerplatte verteilt angeordnet sind, indem sie als symmetrisch angeordnete Gruppen von zueinander parallelen oder untereinander aufgefächerten Stegen ausgebildet sind.

Nach einer weiteren bevorzugten Ausgestaltung ist vorgesehen, daß zumindest ein Stegbereich als an die Durchstellungsbereiche anschließender Randbereich ausgebildet ist. Insbesondere ist ein oder eine Mehrzahl von Stegbereichen begrenzter Länge oder ein umlaufender Stegbereich als an die Durchstellungsbereiche anschließende Randbereich ausgebildet. Auch mit dieser Ausgestaltungsform wird die Steifigkeit der Trägerplatte erhöht. Bei geeigneter Anordnung einzelner Stegbereiche begrenzter Länge an den kürzeren Enden der Trägerplatte können diese gemeinsam mit den anschließenden Durchstellungsbereichen eine effektive Aufdickung der Trägerplatte erzeugen, die für Halterungs- und Führungsaufgaben erforderlich ist. Dies gilt insbesondere, wenn mehrere kürzere Stegbereiche, die jeweils von Durchstellungsbereichen unterbrochen sind, sich entlang des Plattenrandes aneinander anschließen.

Ungeachtet der vorstehend beschriebenen Funktion der Mehrzahl von Stegbereichen ist in einer weitergehenden Ausgestaltung insbesondere vorgesehen, daß die auf der Plattenrückseite in die Stegbereiche eingelegten Anlageelemente aufgeschweißt sind. Die Anlageelemente erhöhen die Festigkeit der Trägerplatte und lassen eine unmittelbare Krafteinleitung von der Plattenrückseite her auch in den Stegbereichen zu. Dies gilt sowohl für Stegbereiche innerhalb der Durchstellungsbereiche als auch für Stegbereiche am Rande der Durchstellungsbereiche.

Die Kopffläche der vorgenannten Anlageelemente kann bündig mit der Oberfläche der Durchstellungsbereiche auf der Plattenrückseite abschließen. Hierdurch kann eine gleichmäßige Krafteinleitung in die Stegbereiche und die angrenzende Belagträgerplatte erfolgen. Vorzugsweise ist jedoch vorgesehen, daß sie gegenüber dieser Oberfläche zurückversetzt liegt, damit eine Krafteinleitung unmittelbar in die Trägerplatte erfolgen kann, oder daß sie gegenüber dieser erhaben ist, sofern eine Krafteinleitung in die Trägerplatte gerade über die Anlageelemente erfolgen soll.

Nach einer weiteren günstigen Ausgestaltungsform kann vorgesehen sein, daß auf der Plattenrückseite ausschließlich oder zusätzlich auf die Durchstellungsbereiche Anlageelemente aufgeschweißt sind. Hiermit wird die effektive Plattendicke nochmals erhöht. Die Anordnung derartiger Anlageelemente ist insbesondere im Bereich des oder der auf die Rückseite der Trägerplatte einwirkenden Bremskolben vorzusehen.

Die auf der Plattenrückseite in den Stegbereichen bzw. an den Durchstellungsbereichen stoffschlüssig fixierten Anlageelemente können insbesondere angeschweißt werden, z.B. mittels Widerstandsschweißens. Es ist auch möglich, die Anlageelemente anzunieten oder in Durchgangslöcher oder Sacklöcher der Trägerplatte einzuformen.

Das erfindungsgemäße Verfahren zur Herstellung einer Bremsbelagträgerplatte der genannten Art besteht darin, daß diese aus Stahlblech von im wesentlichen gleichmäßiger Dicke durch plastische Umformung hergestellt wird, indem auf der Vorderseite erhabene Stegbereiche und demgegenüber zurückversetzte Durchstellungsbereiche ausgebildet werden. Dabei bilden die Stegbereiche aufgrund der gleichmäßigen Dicke des Stahlblechs entsprechende Vertiefungen auf der Plattenrückseite. Es wird eine Mehrzahl von Stegbereichen erzeugt, die einen oder mehrere Randbereiche der Belagträgerplatte und/oder zumindest einen zentralen Bereich innerhalb der zurückversetzten Durchstellungsbereiche bilden können. Dabei bilden die Stegbereiche durch den Umformvorgang auf der Plattenrückseite entsprechende Vertiefungen. Als Ausgangsmaterial für die Trägerplatte kann übliches Spaltband, das heißt kalt- oder warmgewalztes Breitband, ausreichender Dicke verwendet werden, das in einem Umformschritt zunächst mit den Durchstellungsbereichen und den Stegbereichen versehen wird, und dann unter Ausbildung der Umrißlinie des Randbereiches in seiner endgültigen Form ausgestanzt wird.

Auf die Stegbereiche können rückseitig ein oder mehrere Anlageelemente aufgebracht werden, beispielsweise sofern Abstützkräfte oder Führungskräfte rückwärtig nicht nur im Bereich der Durchstellung, sondern auch in Teilen der Stegbereiche in die Trägerplatte eingeleitet werden müssen. Insbesondere ist vorgesehen, daß auf der Plattenrückseite in bzw. auf zumindest eine der Vertiefungen ein Anlageelement eingelegt bzw. aufgesetzt und stoffschlüssig befestigt wird. Die Anlageelemente können rückseitig in eine oder mehrere Vertiefungen der zentralen Stegbereiche eingesetzt werden, bzw. auf den Randbereich aufgesetzt und anschließend fixiert werden. Die Anlageelemente sind insbesondere aus Stahl hergestellt und werden vorzugsweise aufgeschweißt, beispielsweise mittels Widerstandsschweißen. Auf der vorneliegenden Bremsbelagseite können vor dem Aufbringen und Ausbilden des Bremsbelages auf die Auflagefläche Metallbolzen oder Metallgitter aufgeschweißt werden.

In bevorzugter Weiterbildung des Verfahrens können die vorgenannten Anlageelemente und auf der Auflagefläche des Bremsbelages anzuordnende Metallbolzen oder Metallgitter in einer einzigen Aufspannung der Trägerplatte aufgeschweißt werden, insbesondere nach dem Widerstandsschweißverfahren. Da das Aufschweißen dieser Formschlußmittel vielfach bereits üblich ist, wird durch den Einsatz der Anlageelemente auf der Rückseite der Trägerplatte kein zusätzlicher Verfahrensaufschritt erforderlich. Die Anlageelemente können Blechstreifen oder Draht- oder Profilstücke sein, die vor dem Schweißen Schweißbuckel zur Herstellung von Punktkontakten oder Rippen zur Herstellung von Linienkontakten aufweisen, die jeweils beim Widerstandsschweißen flachgedrückt werden.

Ein bevorzugtes Ausführungsbeispiel ist in den Zeichnungen dargestellt.

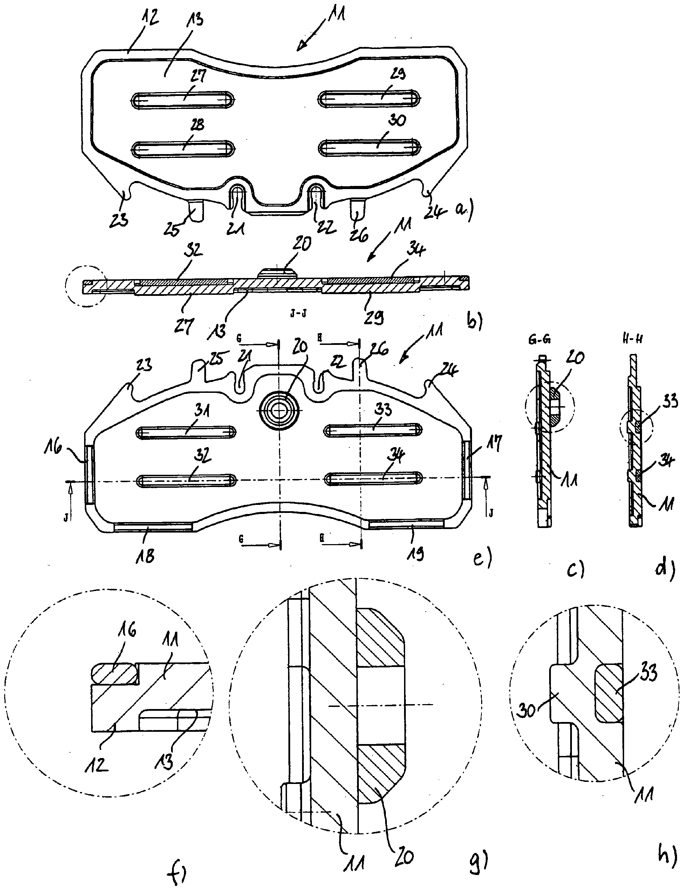

Figur 1 zeigt in den einzelnen Darstellungen folgendes:
a) die Trägerplatte in Ansicht auf die Bremsbelagseite (Vorderseite);
b) die Trägerplatte im Schnitt I-I nach Darstellung e);
c) die Trägerplatte im Schnitt G-G nach Darstellung a);
d) die Trägerplatte im Schnitt H-H nach Darstellung a);
e) die Trägerplatte in Ansicht auf die Bremskolbenseite (Rückseite);
f) ein Detail aus Darstellung b) in Vergrößerung;
g) ein Detail aus Darstellung c) in Vergrößerung;
h) ein Detail aus Darstellung d) in Vergrößerung.

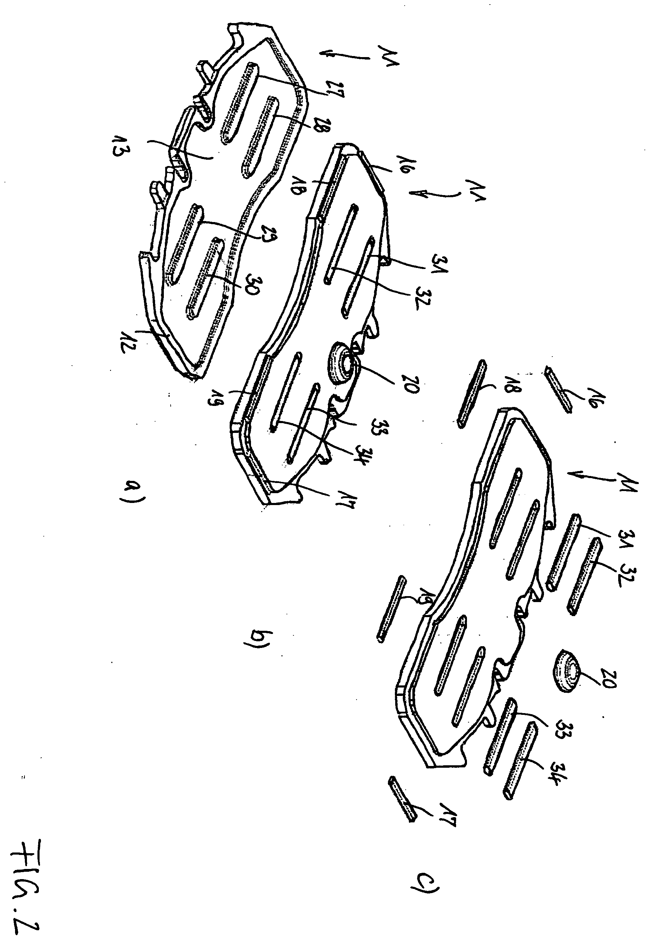

Figur 2 zeigt in den einzelnen 3-D-Darstellungen folgendes:
a) die Trägerplatte in Ansicht auf die Bremsbelagseite (Vorderseite);
b) die Trägerplatte in Ansicht auf die Rückseite;
c) die Trägerplatte in Ansicht auf die Rückseite in Explosionsdarstellungen.

Die Darstellungen der Figur 1 werden nachstehend gemeinsam beschrieben.

Die Trägerplatte 11 besteht aus Material von ursprünglich durchgehend gleicher Dicke, an dem am Rand ein umlaufender Stegbereich 12 und eine innerhalb des umlaufenden Stegbereiches liegende Durchstellung 13 erkennbar sind. Innerhalb der Durchstellung 13 liegen weitere vier einzelne rippenförmige Stegbereiche 27, 28, 29, 30. Die Stegbereiche 12, 27, 28, 29, 30 und der Durchstellungsbereich 13 haben auch nach der Umformung im wesentlichen gleiche Dicke. Die innerhalb des umlaufenden Stegbereiches 12 zurückliegende Fläche des Durchstellungsbereiches stellt im wesentlichen die Auflagefläche für einen Bremsbelag dar. Von der Plattenrückseite betrachtet bildet die Durchstellung 13 eine erhabene Fläche und die Stegbereiche 12, 27, 28, 29, 30 einen zurückliegenden Rand und Nuten.

An den kürzeren Seiten der Trägerplatte 11 sind auf der Plattenrückseite im Stegbereich 12 zwei Anlageelemente 16, 17 aufgeschweißt, auf der unteren (inneren) Seite im Stegbereich 12 zwei weitere Anlageelemente 18, 19 und in den Stegbereichen 27, 28, 29, 30 vier Anlageelemente 31, 32, 33, 34 eingelegt und aufgeschweißt, deren Kopfebene gegenüber der Oberfläche des Durchstellbereiches 13 etwas erhaben ist, jedoch auch in einer Ebene mit dieser liegen könnte. Durch diese Anlageelemente wird die Funktionsfläche der Plattenrückseite erweitert, wobei die Anlageelemente 16, 17, 18, 19 in solchen Bereichen angeordnet werden, in denen eine Führung, Abstützung oder Krafteinleitung in die Trägerplatte 11 auch im Randbereich erfolgen muß. Die Anlageelemente 16, 17, 18, 19 könnten auch in anderen Positionen als hier dargestellt liegen.

An der nach außen gekrümmten Außenseite der Trägerplatte 11 sind zwei Ausklinkungen 21, 22, zwei Haltenasen 23, 24 und zwei Führungsnasen 25, 26 zur Befestigung der fertigen Bremsbelagplatte ausgebildet. Auf der Auflagefläche für den Bremsbelag können im Durchgangsbereich 13 hier nicht dargestellte Metallbolzen oder Metallgitter, insbesondere aus Streckmetall aufgebracht werden, die die Querkräfte des nach Fertigstellung der Trägerplatte aufzubringende Bremsbelages auffangen und in die Trägerplatte 11 einleiten sollen. Solche Metallbolzen oder Metallgitter können in einer einzigen Aufspannung der Trägerplatte 11 mit der gleichen Verfahrenstechnik wie die Anlageelemente, insbesondere im Widerstandsschweißverfahren, mit der Trägerplatte 11 verbunden werden. Hiermit ist im Vergleich mit Trägerplatten aus Gußwerkstoff eine leichtbauende und durch die Stegbereiche hochfeste Trägerplatte bereitgestellt, die sich außerordentlich günstig herstellen läßt. Der Materialeinsatz ist wesentlich geringer als bei bekannten ebenen Trägerplatten aus Stahl von konstanter großer Dicke. Die Verfahrensschritte zur Herstellung sind in der Anzahl wesentlich reduziert.

Die Darstellungen der Figur 2 werden nachstehend gemeinsam beschrieben. Gleiche Einzelheiten sind mit gleichen Bezugsziffern wie in Figur 1 bezeichnet.

In den Darstellungen a und b werden insbesondere die gegenüber dem Durchstellungsbereich 13 erhabenen Stegbereiche 12, 27, 28, 29, 30 der Trägerplatte 11 deutlich, die sich auf der Plattenrückseite als zurückgelegter Rand bzw. Nuten darstellen, auf die bzw. in die die Auflagekörper 16, 17, 18, 19, 31, 32, 33, 34 aufgelegt bzw. eingelegt sind. Zusätzlich ist der auf der Plattenrückseite im Durchstellungsbereich aufgeschweißte Auflagekörper 20 für die Krafteinleitung durch einen Bremskolben erkennbar. In Darstellung c sind der umgeformte Plattenkörper und die neun Auflagekörper nochmals verdeutlicht.

Die Besonderheit der erfindungsgemäßen Ausführungsformen besteht darin, daß auf der Plattenrückseite der umgeformten Trägerplatte in zumindest eine der Vertiefungen ein oder mehrere Auflagekörper 16, 17, 18, 19, 31, 32, 33, 34 aufgelegt bzw. eingelegt und stoffschlüssig befestigt sind. Die Verwendung einer umgeformten Trägerplatte ermöglicht deutliche Material- und Gewichtseinsparungen. Durch die angeschweißten Auflagekörper 16, 17, 18, 19, 31, 32, 33, 34 wird die effektive Plattendicke in höher belasteten Bereichen erhöht, so daß die Belagträgerplatte insgesamt eine hohe Festigkeit bei geringem Materialeinsatz aufweist.

### Bezugszeichenliste

- 11: Trägerplatte
- 12: Stegbereich, umlaufend
- 13: Durchstellung
14
15
- 16: Auflagekörper
- 17: Auflagekörper
- 18: Auflagekörper
- 19: Auflagekörper
- 20: Auflagekörper
- 21: Ausklinkung
- 22: Ausklinkung
- 23: Haltenase
- 24: Haltenase
- 25: Führungsnase
- 26: Führungsnase
- 27: Stegbereich (rippenförmig)
- 28: Stegbereich (rippenförmig)
- 29: Stegbereich (rippenförmig)
- 30: Stegbereich (rippenförmig)
- 31: Anlageelement
- 32: Anlageelement
- 33: Anlageelement
- 34: Anlageelement

## Patentansprüche

1. Bremsbelagträgerplatte für eine Scheibenbremse, die aus umgeformtem Stahlblech von gleichmäßiger Dicke besteht und auf einer Vorderseite erhabene Stegbereiche (12, 27, 28, 29, 30) und demgegenüber zurückversetzte Durchstellungsbereiche (13) umfaßt, die im wesentlichen die Auflagefläche für einen Bremsbelag bilden, wobei die Stegbereiche (12, 27, 28, 29, 30) auf der Plattenrückseite Vertiefungen bilden,
**dadurch gekennzeichnet, daß** auf der Plattenrückseite in zumindest eine der Vertiefungen ein Anlageelement (16, 17, 18, 19, 31, 32, 33, 34) eingelegt und stoffschlüssig befestigt ist.

2. Trägerplatte nach Anspruch 1, **dadurch gekennzeichnet, daß** zumindest ein Stegbereich (27, 28, 29, 30) von begrenzter Länge innerhalb der zurückversetzten Durchstellungsbereiche (13) ausgebildet ist.

3. Trägerplatte nach Anspruch 2, **dadurch gekennzeichnet, daß** mehrere Stegbereiche (27, 28, 29, 30) innerhalb der zurückversetzten Durchstellungsbereiche (13) ausgebildet sind, die in Form von Gruppen von parallelen oder aufgefächerten Rippen hergestellt sind.

4. Trägerplatte nach Anspruch 2 oder 3, **dadurch gekennzeichnet, daß** zumindest in einem der Stegbereiche (27, 28, 29, 30) von begrenzter Länge innerhalb der zurückversetzten Durchstellungsbereiche (13) ein Anlageelement (31, 32, 33, 34) eingelegt und stoffschlüssig befestigt ist.

5. Trägerplatte nach einem der Ansprüche 1 bis 4, **dadurch gekennzeichnet, daß** zumindest ein Stegbereich (12), insbesondere ein oder mehrere Stegbereiche von begrenzter Länge oder ein umlaufender Stegbereich (12), als an die Durchstellungsbereiche (13) anschließender Randbereich ausgebildet sind.

6. Trägerplatte nach Anspruch 5, **dadurch gekennzeichnet, daß** zumindest auf einen der als Randbereich ausgebildeten Stegbereiche (12) zumindest ein Anlageelement (31, 32, 33, 34) aufgesetzt und stoffschlüssig befestigt ist.

7. Trägerplatte nach einem der Ansprüche 1 bis 6, **dadurch gekennzeichnet, daß** das auf der Plattenrückseite in zumindest eine der Vertiefungen eingesetzte oder aufgesetzte zumindest eine Anlageelement (16, 17, 18, 19, 31, 32, 33, 34) aufgeschweißt ist.

8. Trägerplatte nach einem der Ansprüche 1 bis 7, **dadurch gekennzeichnet, daß** die Kopffläche des in die Vertiefung des zumindest einen Stegbereichs (12, 27, 28, 29, 30) eingelegten Anlageelements (16, 17, 18, 19, 31, 32, 33, 34) gegenüber der rückseitigen Oberfläche der Durchstellungsbereiche (13) zurückversetzt liegt, mit dieser bündig ist, oder gegenüber dieser erhaben ist.

9. Verfahren zur Herstellung einer Bremsbelagträgerplatte für eine Scheibenbremse, die aus Stahlblech von gleichmäßiger Dicke durch plastische Umformung hergestellt wird, indem auf der Vorderseite erhabenen Stegbereiche (12, 27, 28, 29, 30) und demgegenüber zurückversetzte Durchstellungsbereiche ausgebildet werden, wobei die Stegbereiche (12, 27, 28, 29, 30) auf der Plattenrückseite Vertiefungen bilden,
**dadurch gekennzeichnet, daß** auf der Plattenrückseite in zumindest eine der Vertiefungen ein Anlageelement (16, 17, 18, 19, 31, 32, 33, 34) eingelegt und stoffschlüssig befestigt wird.

10. Verfahren nach Anspruch 9, **dadurch gekennzeichnet, daß** von den erhabenen Stegbereichen zumindest ein Stegbereich (27, 28, 29, 30) von begrenzter Länge innerhalb der zurückversetzten Durchstellungsbereiche (13) erzeugt wird.

11. Verfahren nach Anspruch 10, **dadurch gekennzeichnet, daß** mehrere Stegbereiche (27, 28, 29, 30) innerhalb der zurückversetzten Durchstellungsbereiche (13) erzeugt werden, die in Form von parallelen oder aufgefächerten Rippen erzeugt werden.

12. Verfahren nach Anspruch 10 oder 11, **dadurch gekennzeichnet, daß** zumindest in einem der Stegbereiche (27, 28, 29, 30) von begrenzter Länge innerhalb der zurückversetzten Durchstellungsbereiche (13) ein Anlageelement (31, 32, 33, 34) eingelegt und stoffschlüssig befestigt wird.

13. Verfahren nach einem der Ansprüche 9 bis 12, **dadurch gekennzeichnet, daß** ein oder mehrere Stegbereiche von begrenzter Länge und/oder ein umlaufender Stegbereich (12) als an die Durchstellungsbereiche (13) anschließender Randbereich erzeugt wird.

14. Verfahren nach Anspruch 13, **dadurch gekennzeichnet, daß** zumindest ein Anlageelement (31, 32, 33, 34) auf zumindest einen der als Randbereich ausgebildeten Stegbereiche (12) aufgesetzt und befestigt wird.

15. Verfahren nach einem der Ansprüche 9 bis 14, **dadurch gekennzeichnet, daß** das auf der Plattenrückseite in bzw. auf zumindest einen der Stegbereiche (12, 27, 28, 29, 30) eingelegte bzw. aufgesetzte Anlageelement (16, 17, 18, 19, 31, 32, 33, 34) aufgeschweißt wird, insbesondere mittels Widerstandschweißens.

## Claims

1. A brake lining carrier plate for a disk brake, which consists of formed steel sheet of uniform thickness and comprises, on a front side, raised web regions (12, 27, 28, 29, 30) and through-formed regions (13) which are set back relative thereto and which, substantially, form the supporting face for a brake lining, wherein the web regions (12, 27, 28, 29, 30) form indentations on the reverse side of the plate,
**characterised in**
**that** on the reverse side of the plate a contact element (16, 17, 18, 19, 31, 32, 33, 34) is inserted into at least one of the indentations and fixed in a material-locking way.

2. A carrier plate according to claim 1,
**characterised in**
**that** at least one web region (27, 28, 29, 30) of a limited length is formed in the set-back through-formed regions (13).

3. A carrier plate according to claim 2,
**characterised in**
**that**, within the set-back through-formed regions (13), a plurality of web regions (27, 28, 29, 30) is formed which are produced in the form of groups of parallel or fanned ribs.

4. A carrier plate according to claim 2 or 3,
**characterised in**
**that** into at least one of the web regions (27, 28, 29, 30) of a limited length inside the set-back through-formed regions (13) there is inserted a contact element (31, 32, 33, 34) and fixed in a material-locking way.

5. A carrier plate according to any one of claims 1 to 4,
**characterised in**
**that** at least one web region (12), more particularly one or several web regions of a limited length or a continuous web region (12) are provided in the form of an edge region adjoining the through-formed regions (13).

6. A carrier plate according to claim 5,
**characterised in**
**that** on to at least one of the web regions (12) provided in the form of edge regions there is positioned at least one contact element (31, 32, 33, 34) and fixed in a material-locking way.

7. A carrier plate according to any one of claims 1 to 6,
**characterised in**
**that** the at least one contact element (16, 17, 18, 19, 31, 32, 33, 34), which is inserted into or positioned on at least one of the indentations on the reverse side of the plate, is welded on.

8. A carrier plate according to any one of claims 1 to 7,
**characterised in**
**that** the head face of the contact element (16, 17, 18, 19, 31, 32, 33, 34) inserted into the indentation of the at least one web region (12, 27, 28, 29, 30) is positioned so as to be set back relative to the rear surface of the through-formed regions (13), is flush with same or raised relative to same.

9. A method of producing a brake lining carrier plate for a disk brake, which is produced out of steel sheet of a uniform thickness by plastic deformation in that, on the front side, there are formed raised web regions (12, 27, 28, 29, 30) and through-formed regions set back relative thereto, wherein the web regions (12, 27, 28, 29, 30) form indentations on the reverse side of the plate,
**characterised in**
**that**, on the reverse side of the plate, a contact element (16, 17, 18, 19, 31, 32, 33, 34) is inserted into at least one of the indentations and fixed in a material-locking way.

10. A method according to claim 9,
**characterised in**
**that** of the raised web regions, at least one web region (27, 28, 29, 30) is produced of a limited length inside the set-back through-formed regions (13).

11. A method according to claim 10,
**characterised in**
**that** there are produced several web regions (27, 28, 29, 30) inside the set-back through-formed regions (13) which are produced in the form of parallel or fanned ribs.

12. A method according to claim 10 or 11,
**characterised in**
at least into one of the web regions (27, 28, 29, 30) of a limited length inside the set-back through-formed regions (13) there is inserted a contact element (31, 32, 33, 34) and fixed in a material-locking way.

13. A method according to any one of claims 9 to 12,
**characterised in**
**that** one or several web regions of a limited length and/or a continuous web region (12) is produced as an edge region adjoining the through-formed regions (13).

14. A method according to claim 13,
**characterised in**
**that** at least one contact element (31, 32, 33, 34) is placed on to at least one of the web regions (12) provided in the form of an edge region and fixed thereto.

15. A method according to any one of claims 9 to 14,
**characterised in**
**that** the contact element (16, 17, 18, 19, 31, 32, 33, 34), which is inserted into or placed on to at least one of the web regions (12, 27, 28, 29, 30) on the reverse side of the plate, is welded on, more particularly by resistance welding.

## Revendications

1. Plaque support de garniture de frein pour un frein à disque, qui est constituée d'une tôle d'acier mise en forme, d'épaisseur uniforme, et qui comprend sur un côté avant des régions de nervurage (12, 27, 28, 29, 30) en relief et des régions de décrochement (13) en retrait par rapport aux précédentes, qui forment pour l'essentiel la surface porteuse pour une garniture de frein, les régions de nervurage (12, 27, 28, 29, 30) formant des renfoncements sur le côté arrière de la plaque,
**caractérisée en ce qu'**un élément d'appui (16, 17, 18, 19, 31, 32, 33, 34) est inséré et fixé par liaison de matière dans au moins un des renfoncements sur le côté arrière de la plaque.

2. Plaque support selon la revendication 1, **caractérisée en ce qu'**au moins une région de nervurage (27, 28, 29, 30) est configurée de longueur limitée à l'intérieur des régions de décrochement (13) en retrait.

3. Plaque support selon la revendication 2, **caractérisée en ce que** plusieurs régions de nervurage (27, 28, 29, 30) sont configurées à l'intérieur des régions de décrochement (13) en retrait et sont réalisées sous la forme de groupes de nervures parallèles ou en éventail.

4. Plaque support selon la revendication 2 ou 3, **caractérisée en ce qu'**un élément d'appui (31, 32, 33, 34) est inséré et fixé par liaison de matière au moins dans une des régions de nervurage (27, 28, 29, 30) de longueur limitée à l'intérieur des régions de décrochement (13) en retrait.

5. Plaque support selon l'une des revendications 1 à 4, **caractérisée en ce qu'**au moins une région de nervurage (12), en particulier une ou plusieurs régions de nervurage de longueur limitée ou une région de nervurage périphérique (12), est réalisée sous la forme d'une région de bord se raccordant aux régions de décrochement (13).

6. Plaque support selon la revendication 5, **caractérisée en ce qu'**au moins un élément d'appui (31, 32, 33, 34) est placé et fixé par liaison de matière au moins sur une des régions de nervurage (12) réalisées sous forme de région de bord.

7. Plaque support selon l'une des revendications 1 à 6, **caractérisée en ce que** l'élément d'appui au moins unique (16, 17, 18, 19, 31, 32, 33, 34) placé ou inséré dans au moins un des renfoncements sur le côté arrière de la plaque est soudé.

8. Plaque support selon l'une des revendications 1 à 7, **caractérisée en ce que** la face de tête de l'élément d'appui (16, 17, 18, 19, 31, 32, 33, 34) inséré dans le renfoncement de la région de nervurage au moins unique (12, 27, 28, 29, 30) se trouve, par rapport à la surface du côté arrière des régions de décrochement (13), en retrait, en affleurement ou en relief.

9. Procédé de fabrication d'une plaque support de garniture de frein pour un frein à disque, qui est fabriquée par déformation plastique à partir d'une tôle d'acier d'épaisseur uniforme par le fait que des régions de nervurage (12, 27, 28, 29, 30) en relief et des régions de décrochement en retrait par rapport aux précédentes sont formées sur le côté avant, les régions de nervurage (12, 27, 28, 29, 30) formant des renfoncements sur le côté arrière de la plaque,
**caractérisé en ce qu'**un élément d'appui (16, 17, 18, 19, 31, 32, 33, 34) est inséré et fixé par liaison de matière dans au moins un des renfoncements sur le côté arrière de la plaque.

10. Procédé selon la revendication 9, **caractérisé en ce que**, parmi les régions de nervurage en relief, au moins une région de nervurage (27, 28, 29, 30) de longueur limitée est produite à l'intérieur des régions de décrochement (13) en retrait.

11. Procédé selon la revendication 10, **caractérisé en ce que** plusieurs régions de nervurage (27, 28, 29, 30) sont produites à l'intérieur des régions de décrochement (13) en retrait et sont réalisées sous la forme de nervures parallèles ou en éventail.

12. Procédé selon la revendication 10 ou 11, **caractérisé en ce qu'**un élément d'appui (31, 32, 33, 34) est inséré et fixé par liaison de matière au moins dans une des régions de nervurage (27, 28, 29, 30) de longueur limitée à l'intérieur des régions de décrochement (13) en retrait.

13. Procédé selon l'une des revendications 9 à 12, **caractérisé en ce qu'**une ou plusieurs régions de nervurage de longueur limitée et/ou une région de nervurage périphérique (12) sont produites sous la forme d'une région de bord se raccordant aux régions de décrochement (13).

14. Procédé selon la revendication 13, **caractérisé en ce qu'**au moins un élément d'appui (31, 32, 33, 34) est placé et fixé sur au moins une des régions de nervurage (12) réalisées sous forme de région de bord.

15. Procédé selon l'une des revendications 9 à 14, **caractérisé en ce que** l'élément d'appui (16, 17, 18, 19, 31, 32, 33, 34) inséré ou respectivement placé dans ou respectivement sur au moins une des régions de nervurage (12, 27, 28, 29, 30) sur le côté arrière de la plaque est soudé, en particulier par soudage par résistance.
